# EUROPEAN PATENT APPLICATION

(11) **EP 4 390 642 A1**
(43) Date of publication of application: **26.06.2024**
(21) Application number: 22871831.8
(22) Date of filing: 09.09.2022
(51) Int. Cl.: G06F 3/0483, G06F 3/0485

(54) **PAGE PROCESSING METHOD AND APPARATUS, DEVICE, AND STORAGE MEDIUM**

(30) Priority: 22.09.2021 CN 202111106573
(71) Applicant: Beijing Zitiao Network Technology Co., Ltd., Beijing 100190 (CN)
(72) Inventor: SONG, Licong, Beijing 100086 (CN); HUA, Yanting, Beijing 100086 (CN); CAO, Yirui, Beijing 100086 (CN); JI, Liyue, Beijing 100086 (CN); XU, Han, Beijing 100086 (CN)
(74) Representative: Dentons UK and Middle East LLP
(86) International application number: PCT/CN2022/118070
(87) International publication number: WO 2023/045783

(57) **Abstract**

The disclosure provides a method, apparatus, device, and storage medium for page processing. The method of page processing includes: detecting that predetermined application is launched; presenting a launch page in the predetermined application, and presenting a predetermined control at a predetermined page boundary of the launch page, wherein the launch page comprises multimedia display information of a target object, and the predetermined control is configured to jump to a details page of the target object after being triggered by a predetermined sliding operation, and a sliding direction of the predetermined sliding operation is a direction away from the predetermined page boundary.

## Description

This application claims priority to Chinese patent application No. 202111106573.9, filed with the Chinese Patent Office on September 22, 2021, the entirety of which is incorporated herein by reference.

### FIELD

The present disclosure relates to the field of computer technology, such as relates to a method, apparatus, device, and storage medium for page processing.

### BACKGROUND

With the rapid development of terminal technology, pages of applications (APPs) installed in terminals are becoming more and more rich, providing users with diverse information.

Launch page generally refers to a page displayed before the application page when the application is launched. Through the launch page, more Internet information can be presented to the users, including information related or unrelated to the application. In the launch page, multimedia display information such as advertisements is often displayed. When the users are interested in multimedia display information, they can jump to the corresponding details page by clicking a jump button control in the middle of the launch page.

However, in the above implementation, the presence of the jump button control may impact the aesthetics of the launch page, and cause interference in viewing information. The interaction pattern is also monotonous and needs to be improved.

### SUMMARY

The present disclosure provides a method, apparatus, storage medium, and device for page processing, which can optimize a page processing solution based on a launch page.

The present disclosure provides a method of page processing, comprising:
detecting that predetermined application is launched;
presenting a launch page in the predetermined application, and presenting a predetermined control at a predetermined page boundary of the launch page, wherein the launch page comprises multimedia display information of a target object, and the predetermined control is configured to jump to a details page of the target object after being triggered by a predetermined sliding operation, and a sliding direction of the predetermined sliding operation is a direction away from the predetermined page boundary.

The present disclosure provides an apparatus for page processing, comprising:
a launch detecting module configured to detect whether a predetermined application is launched;
a predetermined control display module configured to, after detecting that the predetermined application is launched, display a launch page in the predetermined application, and display a predetermined control at a predetermined page boundary of the launch page, wherein the launch page comprises multimedia display information of a target object, and the predetermined control is configured to jump to a details page of the target object after being triggered by a predetermined sliding operation, and a sliding direction of the predetermined sliding operation is a direction away from the predetermined page boundary.

The present disclosure provides an electronic device comprising a memory, a processor, and a computer program stored on the memory and executable by the processor. The processor implements the above method of page processing when executing the computer program.

The present disclosure provides a computer-readable storage medium having a computer program stored thereon which, when executed by a processor, implements the above method of page processing.

### BRIEF DESCRIPTION OF THE DRAWINGS

FIG. 1 is a flowchart of a method of page processing provided in embodiments of the present disclosure;
FIG. 2 is a schematic diagram of a predetermined control page in the related technology.
FIG. 3 is a schematic diagram of a predetermined page control provided in embodiments of the present disclosure;
FIG. 4 is a schematic page of another predetermined control provided in embodiments of the present disclosure;
FIG. 5 is a schematic page of another predetermined control provided in embodiments of the present disclosure;
FIG. 6 is a schematic page of another predetermined control provided in embodiments of the present disclosure;
FIG. 7 is a schematic diagram of a dynamic display effect of a predetermined control provided by embodiments of the present disclosure;
FIG. 8 is a flowchart of another method of page processing provided in the embodiments of the present disclosure;
FIG. 9 is a schematic diagram of an interaction process of a method of page processing provided by embodiments of the present disclosure;
FIG. 10 is a block diagram of an apparatus for page processing according to embodiments of the present disclosure;
FIG. 11 is a block diagram of an electronic device according to embodiments of the present disclosure.

### DETAILED DESCRIPTION

The following embodiments of the present disclosure will be described with reference to the accompanying drawings. Although some embodiments of the present disclosure are shown in the drawings, the present disclosure can be implemented in various forms, and these embodiments are provided to understand the present disclosure. The drawings and embodiments of the present disclosure are for illustrative purposes only.

The multiple steps described in the method implementations of the present disclosure can be executed in different orders and/or in parallel. In addition, the method implementations can include additional steps and/or omit the steps shown. The scope of the present disclosure is not limited in this regard.

The term "include" and its variations used in this article are open-ended, i.e. "including but not limited to". The term "based on" means "at least partially based on". The term "one embodiment" means "at least one embodiment"; the term "another embodiment" means "at least one additional embodiment"; and the term "some embodiments" means "at least some embodiments". Relevant definitions of other terms will be given in the following description.

The terns "first" and "second" mentioned in the present disclosure are only used to distinguish different devices, modules, or units, and are not used to limit the order or interdependence of the functions performed by these devices, modules, or units.

The modifications of "one" and "more" mentioned in the present disclosure are illustrative and not restrictive. Those skilled in the art should understand that unless otherwise indicated in the context, they should be understood as "one or more".

The names of the messages or information exchanged between multiple devices in the implementations of the present disclosure are for illustrative purposes only and are not intended to limit the scope of these messages or information.

In the following embodiments, each embodiment simultaneously provides optional features and examples, a plurality of features described in the embodiments may be combined to form a plurality of optional solutions, and each numbered embodiment should not be regarded as only one technical solution.

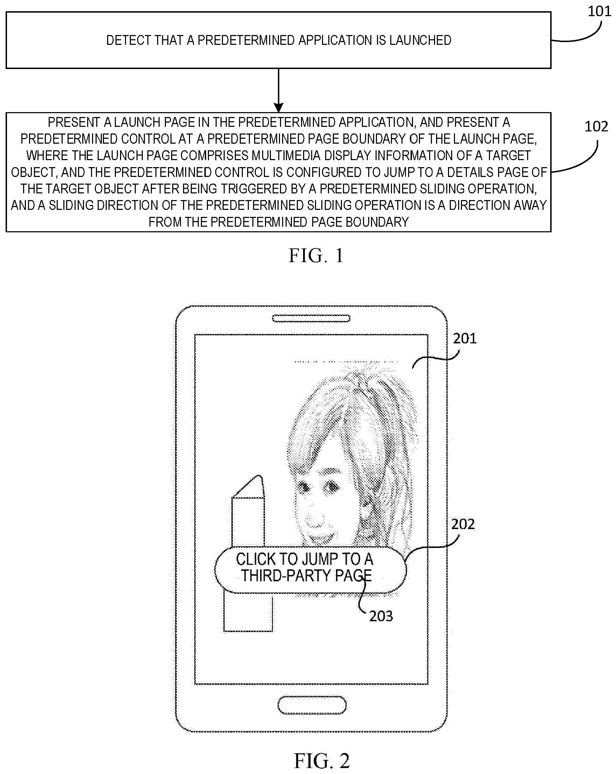

FIG. 1 is a schematic flow diagram of a method of page processing provided in embodiments of the present disclosure. The method may be executed by an apparatus for page processing, which may be implemented in software and/or hardware and can generally be integrated into an electronic device. The electronic device may be a mobile device such as a mobile phone, a smart watch, a tablet computer, and a personal digital assistant; it can also be other devices such as a desktop computer. As shown in FIG. 1, the method includes:
101. Detect that a predetermined application is launched.

In embodiments of the present disclosure, the type of the predetermined application is not limited. For example, the predetermined application may be a short video application or a live streaming application, and may also be other types of applications. For ease of illustration, the short video application is used as an example for the following description.

For example, a running instruction of the predetermined application may be monitored. When a running instruction is received, it may be determined that the predetermined application is detected to launch.

102. Display a launch page in the predetermined application, and display a predetermined control at a predetermined page boundary of the launch page, where the launch page comprises multimedia display information of a target object, and the predetermined control is configured to jump to a details page of the target object after being triggered by a predetermined sliding operation, and a sliding direction of the predetermined sliding operation is a direction away from the predetermined page boundary.

In embodiments of the present disclosure, the launch page may be a page that is displayed after the predetermined application is launched and before an application page of the predetermined application. Take the short video application as an example. An application page may be a page related to a function or content with the predetermined application, such as a video recommendation page.

In the embodiments of the present disclosure, multimedia display information may be displayed or played in the launch page, and the multimedia display information may include image display information or video display information, etc. The display mode may be determined according to the existence form of the multimedia display information. For example, the image display information of the target object may be displayed in the launch page, or the video display information of the target object may be played in the launch page. The multimedia display information may include online delivery information, which may be published on the Internet to achieve a certain promotion effect, including online announcement information, online recruitment information, online advertising, and the like. The multimedia display information may be promoted for a certain subject, and the target object may be the subject in the multimedia display information, which may be configured by the information delivery party.

Taking multimedia display information as an example of online advertising, the target audience may be an advertising subject that the advertiser needs to promote, such as lipsticks, clothes, kitchen utensils and the like. The multimedia display information may be a promotion video created by the advertiser to promote the advertising subject, such as an advertising video related to a brand of lipstick. After the short video application is launched, the users can see a full-screen display video page, which may be a launch page containing the multimedia display information.

In order to facilitate the users to understand the detailed information of the target object to which the multimedia display information belongs, a control for jumping to the details page can generally be provided. In the related art, the control is a button in the middle of the launch page. FIG. 2 is a schematic diagram of a predetermined control in the related art.

As shown in FIG. 2, in the launch page 201 displayed after the predetermined application is launched, a button control 202 is displayed in the middle and lower region of the launch page 201. There is a corresponding text operation prompt 203 in the display region of the button control 202. For example, the text operation prompt 203 may be "click to jump to a third-party page". The user clicks the button control 202 according to the corresponding text operation prompt 203 of the button control 202, result in jumping to a details page of the target object. However, since the position of the button control 202 is located in the lower region of the launch page 201, the multimedia display information is blocked and the completeness of the multimedia display information will be cut off. The user will be excessively disturbed by the button control during the process of viewing the launch page 201. In addition, if the user needs to view the details page 201 of the target object, he/she can only jump to the details page of the target object by clicking the button control 202. If the display size of the button control is reduced, it will be difficult to attract the user's attention, and the trigger method of clicking is too monotonous and boring, leading to poor interaction experience.

In the embodiments of the present disclosure, a predetermined control for jumping to a details page of a target object is provided at a predetermined page boundary of the launch page. The predetermined control is triggered by a predetermined sliding operation in a sliding direction away from the predetermined page boundary. Compared with the button control, it can reduce the blocking of multimedia display information, avoid breaking the completeness of the multimedia display information, thereby reducing the interference during the user's viewing of the launch page. The sliding mode provides strong interaction, which is conducive to enhancing the fun of interaction.

As an example, the predetermined page boundary may be a boundary on one side of the launch page, and the position of the predetermined control may be at any one of the top (or top), bottom (or bottom), left, and right sides of the launch page. The predetermined control may be displayed in the form of a certain geometric shape, such as a bow, a rectangle, a triangle, or an arrow shape, to facilitate the function of jumping from the launch page to the details page of the target object. The predetermined control is placed in the side region of the launch page, which can reduce information interference in the user is viewing the launch page, and improve the aesthetics of the launch page, to prevent users from rejecting the predetermined control.

In addition to the shape, other properties of the predetermined control can also be preconfigured, such as the transparency. A transparency degree of the predetermined control may be 0 (i.e. completely opaque). The transparency degree of the predetermined control can also be greater than 0 and less than 1, that is, it has a certain level of transparency and presents a semi-transparent display effect. The benefits of this configuration are to reduce the impact of the predetermined control on the aesthetics of the launch page, avoid excessive blocking of multimedia display information, so that users can view the complete content of multimedia display information through the predetermined control, thus having an immersive experience viewing the content of multimedia display information, and also reduce the user's sense of rejection of multimedia display information. The transparency degree of the predetermined control may be a numerical value, such as 0.3. In the following, a transparency of greater than 0 and less than 1 is taken as an example for further explanation.

In some embodiments, a display area of the predetermined control can also be configured in advance. The proportion of the display area of the predetermined control to a display area of the launch page is less than a predetermined ratio threshold. The benefits of this configuration are that the display area of the predetermined control may be limited to a certain extent, reducing the impact of the predetermined control on the aesthetics of the launch page and avoiding excessive impact on multimedia display information. For example, the display area of the launch page is A, and the display area of the predetermined control is B. The predetermined ratio threshold may be a numerical value, which may be configured according to the actual situation and may be denoted as *k.* For example, if the value is 0.2, then B/A < *k.*

Exemplary, the predetermined sliding operation may be a user using a short video application. After opening the short video application and seeing the launch page, the finger slides against the predetermined control on the device display interface. The sliding direction of the predetermined sliding operation may be determined according to the position of the predetermined control. If the predetermined control is located at the right boundary, it can slide from right to left; if the predetermined control is located at the left boundary, it can also slide from left to right.

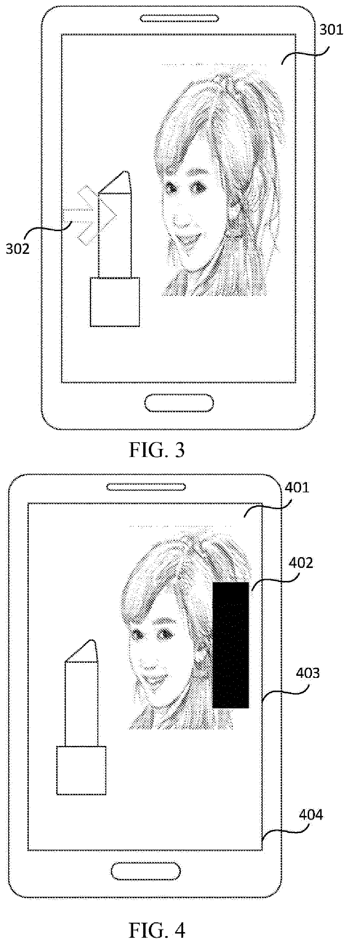

FIG. 3 is a schematic diagram of a predetermined control page provided in embodiments of the present disclosure. As shown in FIG. 3, a predetermined control 302 is displayed at the left boundary of a launch page 301, with an arrow shape and a transparency of being greater than 0 and less than 1. The predetermined control 302 has less blocking of the multimedia display information, and avoid breaking the completeness of the multimedia display information, and attract the user's attention. When the user wants to trigger the predetermined control 302, he/she can input a predetermined sliding operation from left to right away from the left boundary direction.

For example, the details page of the target object may be a page containing detailed information of the target object in the advertiser application. For example, by triggering the predetermined control, it can jump from the launch page of the short video application to the details page of the target object in the corresponding shopping platform application. The details page of the target object can also be a page containing detailed information of the target object in the predetermined application. For example, by triggering the predetermined control, you can jump from the launch page to the details page of the target object in the predetermined application.

For example, after a user starts a short video application, the first advertisement promotion video about a brand of lipstick is played on the launch page, with a predetermined control displayed at the right side of the launch page. When viewing the launch page, the user presses the predetermined control with the finger and slides away from the right boundary to trigger the predetermined control. The launch page can jump to the details page of the lipstick shopping platform under a brand.

The page processing solution provided in the present disclosure detects that the predetermined application is launched; displays the launch page in the predetermined application, and displays the predetermined control at the predetermined page boundary of the launch page, wherein the launch page comprises multimedia display information of the target object, and the predetermined control is configured to jump to the details page of the target object after triggering the predetermined sliding operation, and the sliding direction of the predetermined sliding operation is the direction away from the predetermined page boundary. By adopting the above technical solution, during the process of viewing the launch page, the user can enter the details page of the target object by triggering the predetermined control at the page boundary with a predetermined sliding operation. This can improve the interaction pattern of the launch page jumping to the details page, enhance the interaction feeling of the interaction pattern of the launch page, reduce the interference in viewing the information of the launch page, and improve the aesthetics of the launch page.

In some embodiments, the first display boundary of the predetermined control overlaps with the predetermined page boundary. The benefits of this configuration are that the predetermined control can seamlessly dock with the predetermined page boundary. When the user views the launch page, the interference of viewing the information may be reduced, the aesthetics of the launch page may be increased, and the completeness of the multimedia display information may be prevented from being broken by the predetermined control. The first display boundary may be presented on one side of the launch page in the form of a straight line. For example, the first display boundary and the rightmost boundary of the launch page may be overlapped with each other. FIG. 4 is a schematic diagram of a page with another predetermined control provided by embodiments of the present disclosure. As shown in FIG. 4, a predetermined control 402 at the right boundary of a launch page 401 is in a rectangle shape, with a transparency greater than 0 and less than 1. The rightmost boundary of the predetermined control 402 is the first display boundary 403, which overlaps with the rightmost boundary of the launch page 401, that is, the predetermined page boundary 404.

In some embodiments, a display length of the first display boundary is equal to a display length of the predetermined page boundary. The benefits of this configuration are that the predetermined control may better match the launch page, thereby enhancing the page aesthetics, attracting the user's attention to the predetermined control, improving the attractiveness of the predetermined control to the user, making it less challenging to the users finding the details page jump entry, and improving the efficiency of entering the details page. Herein, the display length of the first display boundary may be measured in pixels. For example, if the height of the launch page video is 2056 pixels, the display length of the first display boundary is 2056 pixels.

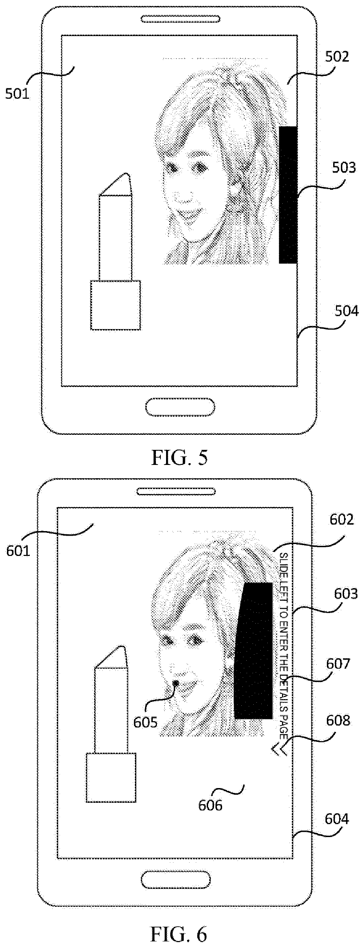

FIG. 5 is a schematic diagram of another predetermined control page provided in embodiments of the present disclosure. As shown in FIG. 5, a predetermined control 502 at the right boundary of a launch page 501 is still in a rectangle shape, with a transparency greater than 0 and less than 1. The rightmost boundary of the predetermined control 502 is the first display boundary 503, which overlaps with the predetermined page boundary 504, and the display length of the first display boundary 503 is equal to the display length of the predetermined page boundary 504. Compared with FIG. 4, it can be seen that the predetermined control 502 is more attractive to the user than the predetermined control 402, thereby making it less challenging to the users finding the details page jump entry, and improving the efficiency of entering the details page.

In some embodiments, a line shape of the second display boundary is an arc shape protruding towards a center point of the launch page. The benefits of this configuration are that when the user is viewing the launch page, it is more comfortable for the user when he/she notices the arc-shaped line that appears on the launch page, reducing the sense of rejection on the predetermined control. The second display boundary may be presented in the form of arc-shaped lines and connected to the first display boundary to form a closed geometric shape, which may be used to prompt the user with the predetermined sliding direction of the sliding operation.

FIG. 6 is a schematic diagram of an page with another predetermined control provided by embodiments of the present disclosure. As shown in FIG. 6, when a short video application is launched by the users, the viewed multimedia display information in a launch page 601 is an advertisement promotion video about a brand of lipstick. The shape of the predetermined control 602 displayed on the right side boundary of the launch page may be bow-shaped. The right side of the bow is a straight edge, that is, the first display boundary 603, which overlaps with the right predetermined page boundary 604 of the launch page. And the display length of the straight edge (the first display boundary 603) may be equal to the display length of the right predetermined page boundary 604 of the launch page. The left side boundary of the semi-arc is an arc-shaped line protruding towards a center point 605 of the launch page, that is, the second display boundary 606. As shown in FIG. 6, the bow-shaped shape can well prompt the user to trigger the predetermined control by sliding to the left.

In some embodiments, the predetermined control includes operation prompt information for the predetermined sliding operation, and the operation prompt information includes text prompt information and/or graphic prompt information. The benefits of this configuration are to allow the user to clearly identify the sliding direction of the predetermined sliding operation and to accelerate the user entering the predetermined sliding operation. The text prompt information may be to prompt of sliding left to enter a shopping platform for a product, or sliding left to enter a shop of a product. The graphic prompt information may be an arrow pattern, such as a line arrow pointing to the left side of the launch page or other forms of arrows. As shown in FIG. 6, the text prompt information 607 may be displayed in the predetermined control 602, such as "slide left to enter the details page", and the line arrow 608 can also be displayed. By combining the bow-shaped predetermined control and various operation prompt information, the user may be more effectively prompted with the predetermined sliding operation.

In some embodiments, the predetermined control is provided with a dynamic display effect, the dynamic display effect includes dynamically extending from the predetermined page boundary towards the center point of the launch page until a minimum distance between a third display boundary of the predetermined control and a center point reaches a first predetermined distance threshold. The benefits of this configuration are that the dynamic display effect of the predetermined control has a certain prompting sliding effect for the user, to clearly identify the sliding direction of the predetermined sliding operation. The third display boundary may be a line shape of a polyline, which is connected to the first display boundary to form a closed geometric shape, or it may be the same as the second display boundary, that is, it may be an arc-line shape protruding towards the center point of the launch page. The first predetermined distance threshold may be set according to actual requirements, and the measure unit is not limited, for example, it may be measured by values of pixel-wise distance.

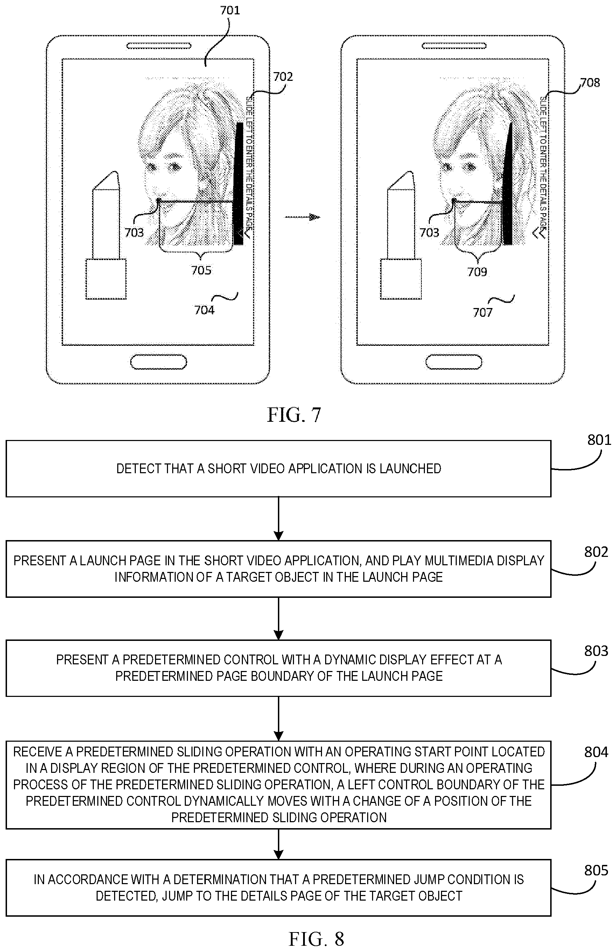

FIG. 7 is a schematic diagram of an page with a dynamic display effect of a predetermined control provided in embodiments of the present disclosure. As shown in FIG. 7, when a short video application is launched by a user, an advertisement promotion video about a brand of lipstick is played in a launch page 701. A predetermined control 702 slowly appears at the right boundary of the launch page 701 and then dynamically extend towards a center point 703 of the launch page. It is assumed that a minimum distance 705 between the center point 703 of the launch page and a third display boundary 704 in the predetermined control 702 is 400 pixels. At this time the minimum distance 705 is greater than the distance value of 300 pixels (assuming that the first predetermined distance threshold is 300). The predetermined control 702 continues to dynamically extend towards the center point 703 of the launch page, which results in the third display boundary 704 dynamically extending to the center point 703 of the launch page while keeping its boundary start point and boundary end point unchanged. The display region of the predetermined control 702 is increasing. Assuming that the third display boundary 704 is dynamically extended to become a new third display boundary 707, and the predetermined control 702 is dynamically extended to become a new predetermined control 708, a minimum distance between the third display boundary 707 and the center point 703 of the launch page also decreases to become the minimum distance 709. At this time, the minimum distance 709 reaches 300 pixels, and the predetermined control 708 stops extending, thereby achieving a dynamic display effect and prompting the user to slide left. In addition, when the transparency degree of the predetermined control is greater than 0 and less than 1, it may be combined with the above dynamic display effect to form a prompt form with a gauze-like prelude animation effect, enhancing the user's interest in entering the sliding operation.

In some embodiments, after presenting the predetermined control at the predetermined page boundary of the launch page, the method further comprises: in response to a predetermined sliding operation for the predetermined control, jumping to the details page of the target object. The benefits of this configuration are that it is possible to jump to the details page of the target object after receiving the correct predetermined sliding operation.

In some embodiments, in response to a predetermined sliding operation for the predetermined control, jumping to the details page of the target object comprises: receiving a predetermined sliding operation operating start point located in the display region of the predetermined control; in accordance with a determination that a predetermined jump condition is satisfied, jumping to the details page of the target object; wherein the predetermined jump condition includes at least one of the following: an operating distance of the predetermined sliding operation being greater than a second predetermined distance threshold; an operating time of the predetermined sliding operation being greater than a predetermined time duration; an end of an operating process of the predetermined sliding operation. The benefits of this configuration are to improve the response accuracy of the predetermined sliding operation.

For example, before the predetermined control is triggered, the display region of the predetermined control is usually located between the boundary of the predetermined page and the center point of the launch page. The users can input the predetermined sliding operation with their fingers. The touching position of the finger at the screen may be considered as the operating start point. The distance the finger slides on the electronic device screen may be considered as an operating distance of the predetermined sliding operation. The size of the second predetermined distance threshold may be set according to actual requirements, and the measure unit is not limited. For example, it may be measured in pixels, such as 100 pixels. When the sliding distance of the user's finger is greater than the second predetermined distance threshold, it may be determined that the user intends to view the details page and may be jumped to the details page. The predetermined time duration may be a time limit, such as one second. The time the user's finger slides on the electronic device screen may be considered as the operating time of the predetermined sliding operation. If the user's finger slides slowly, it may not reach the operating distance condition for a long time. At this time, if the operating time is greater than the predetermined time duration, it is also possible to jump. The ending of the operating process of the predetermined sliding operation is the time when the user's finger leaves the screen, and then it is determined that the user intends to review the details page and the jumping to the details page can be performed.

Any one of the above jump conditions may be used for the determination, or the above jump conditions may be combined for the determination. If at least one of the above predetermined jump conditions is met, it is determined that the predetermined jump condition is met.

For example, the user's finger touches at the display region of the predetermined control and slides in the direction of the center point of the launch page. The details page of the target object is jumped to improve response efficiency if any of the following conditions are met first: the operating distance of the user's sliding operation is greater than the second predetermined distance threshold of 100 pixels, or the user's finger operates on the device screen with the launch page displayed for more than 1 second, or the user's finger leaves the screen.

In some embodiments, the transparency degree of the predetermined control is greater than 0 and less than 1, and the method further includes: during an operating process of the predetermined sliding operation, dynamically moving a fourth display boundary of the predetermined control with a change of an operating position of the predetermined sliding operation. The benefits of this configuration are that the user can clearly identify whether the direction of the predetermined sliding operation is correct, improving the accuracy of the sliding direction of the predetermined sliding operation. In addition, with the dynamic movement of the fourth display boundary, the display area of the predetermined control continues to increase, forming a visual experience of dynamically covering multimedia display information with something such as a gauze, attracting the user to continue sliding until jumping to the details page. The fourth display boundary may be the same as or different from the second display boundary. The fourth display boundary may dynamically move with the change of the action position of the predetermined sliding operation in such a way that the moving distance of the fourth display boundary is dynamically equal to the change distance of the operating position, and the moving speed of the fourth display boundary is dynamically equal to the change speed of the action position.

FIG 8 is a flowchart of another method of page processing according to the embodiments of the present disclosure, embodiments of the present disclosure will be described based on the above embodiment, the predetermined application is a short video application as an example, the method comprising:
801. Detect that a short video application is launched.
802. Display a launch page in the short video application, and play multimedia display information of a target object in the launch page.
803. Display a predetermined control with a dynamic display effect at a predetermined page boundary of the launch page.

The right control boundary of the predetermined control overlaps with the right page boundary of the launch page, and the display length of the right control boundary is equal to that of the right page boundary. The line shape of the left control boundary of the predetermined control is an arc shape protruding towards a center point of the launch page. The predetermined control transparency is greater than 0 and less than 1 (for example, it may be 0.3). The proportion of the display area of the predetermined control to the display area of the launch page is less than a predetermined ratio threshold. The predetermined control includes operation prompt information for a predetermined sliding operation. The dynamic display effect includes dynamically extending the predetermined control from the right page boundary towards the center point of the launch page until a minimum distance between the left control boundary of the predetermined control and the center point reaches a first predetermined distance threshold. The playback process of the dynamic display effect can refer to FIG. 7 and its related description above, which will not be repeated here.

804. Receive a predetermined sliding operation with an operating start point located in a display region of the predetermined control, where during an operating process of the predetermined sliding operation, a left control boundary of the predetermined control dynamically moves with a change of a position of the predetermined sliding operation.

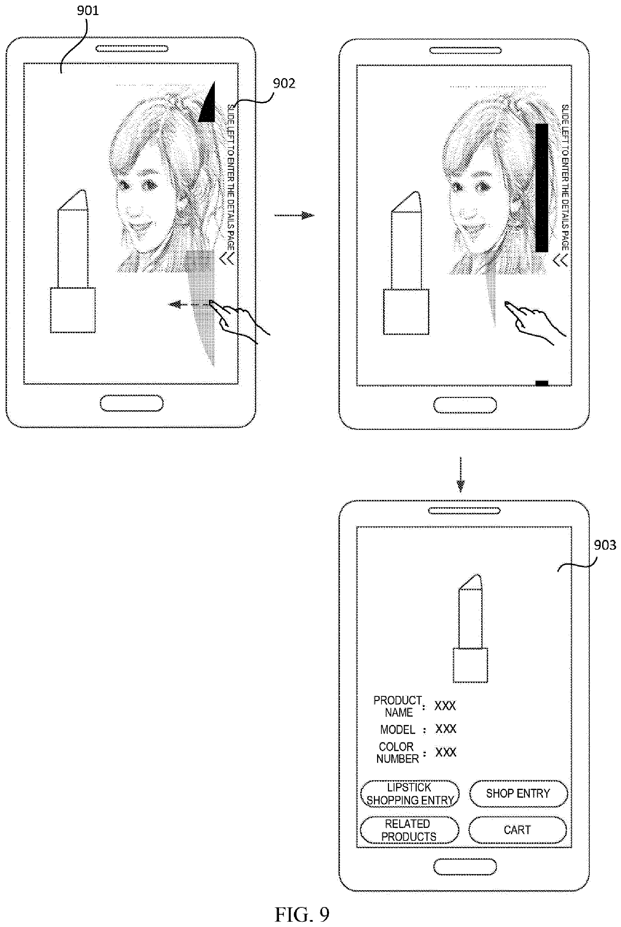

FIG. 9 is a schematic diagram of the interactive process of a method of page processing provided in the present disclosure. As shown in FIG. 9, a launch page 901 with multimedia display information about a brand of lipstick is viewed by a user. A dynamic display effect of the predetermined control 902 is displayed. The user can touch the region where the predetermined control 902 is located and slide to the left according to the text operation prompt information. During the sliding process, the left control boundary of the predetermined control 902 dynamically moves with the change of the position of the sliding operation. At the same time, the display region of the predetermined control 902 also increases with the dynamic movement of the left control boundary.

805. In accordance with a determination that a predetermined jump condition is detected, jump to the details page of the target object.

The predetermined jump condition includes the following: the operating distance of the predetermined sliding operation being greater than the second predetermined distance threshold; or an operating time of the predetermined sliding operation being greater than the predetermined time duration; or an end of an operating process of the predetermined sliding operation.

For example, if any of the above predetermined jump conditions are met, the short video application can jump from the launch page 901 to a details page 903 of the target object, which is convenient for the users to get knowledge about the target object and perform other related operations.

For example, if the user does not trigger the predetermined control with the predetermined sliding operation, after the multimedia display information is displayed, it can automatically jump to an application page of the predetermined application, such as a recommended video stream page of short videos. Alternatively, if the user actively chooses to skip the display of multimedia display information, it can also jump to the application page of the predetermined application.

The method of page processing provided in the embodiments of the present disclosure may be applied to a short video application. After presenting a launch page in the short video application, a bow-shaped semi-transparent predetermined control may be displayed on the right side of the launch page while presenting multimedia display information of a target object to the user. The proportion of the display area of the predetermined control to the display area of the launch page is less than the predetermined proportion threshold, and the predetermined control has a dynamic effect of dynamically extending from the predetermined page boundary to the center point of the launch page. By combining the shape of the predetermined control, the operation prompt information in the predetermined control, and the dynamic display effect, the user may be effectively prompted to perform a predetermined sliding operation. The predetermined control can reduce the interference of viewing the information of the launch page, avoid breaking the completeness of the multimedia display information, improve the aesthetics of the launch page, enhance the attractiveness to the users, and provide a more comfortable appearance of the launch page for the user. After the predetermined control is triggered, it dynamically changes with the user's gesture. When the jump condition is satisfied, the details page of the target object is jumped to from the launch page, which can ensure that the users can quickly enter the details page while enhancing the fun of interaction.

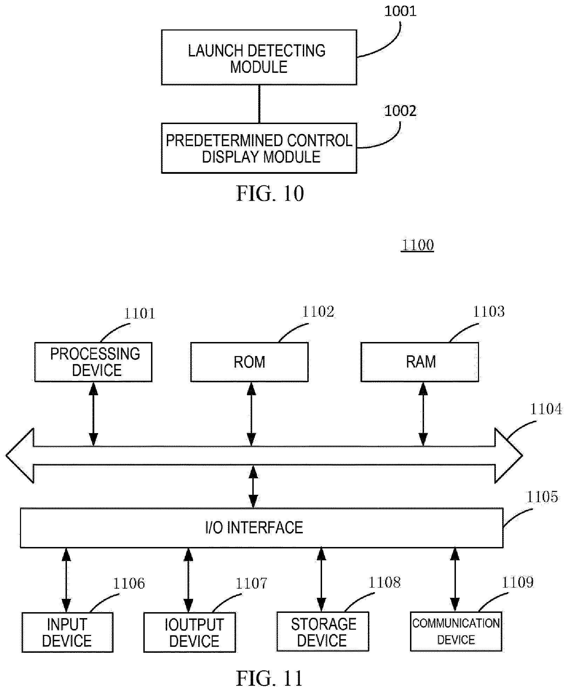

FIG. 10 is a block diagram of an apparatus for page processing provided in the present disclosure. The apparatus can be implemented in software and/or hardware, and is generally integrated in an electronic device. The apparatus can perform page processing by performing the method of page processing. As shown in FIG. 10, the device includes:
a launch detecting module 1001 configured to detect whether a predetermined application is launched; and a predetermined control display module 1002 configured to, after detecting that the predetermined application is launched, display a launch page in the predetermined application, and display a predetermined control at a predetermined page boundary of the launch page, wherein the launch page comprises multimedia display information of a target object, and the predetermined control is configured to jump to a details page of the target object after being triggered by a predetermined sliding operation, and a sliding direction of the predetermined sliding operation is a direction away from the predetermined page boundary.

According to the apparatus for page processing provided in the embodiments of the present disclosure, during the user viewing the launch page, the user can enter the details page of the target object by way of a predetermined sliding operation to trigger a predetermined control at the page boundary, which allows intensive interaction of jump from the launch page to the target details page. In addition, it also mitigate interference in viewing information of the launch page, improving the aesthetics of the launch page.

In one embodiment, a first display boundary of the predetermined control overlaps with the predetermined page boundary.

In one embodiment, a display length of the first display boundary is equal to a display length of the predetermined page boundary.

In one embodiment, a line shape of a second display boundary of the predetermined control is an arc shape protruding towards a center point of the launch page.

In one embodiment, the predetermined control is provided with a dynamic display effect, and the dynamic display effect comprises dynamically extending from the predetermined page boundary towards a center point of the launch page until a minimum distance between a third display boundary of the predetermined control and the center point reaches a first predetermined distance threshold.

In one embodiment, a ratio of a display area of the predetermined control to a display area of the launch page is less than a predetermined ratio threshold.

In one embodiment, the predetermined control comprises operation prompt information of the predetermined sliding operation, and the operation prompt information comprises at least one of text prompt information or graphic prompt information.

In one embodiment, a transparency degree of the predetermined control is greater than 0 and less than 1.

The apparatus may further include:
a details page jumping module configured to, after presenting the predetermined control at the predetermined page boundary of the launch page, jump to the details page of the target object in response to the predetermined sliding operation for the predetermined control.

In one embodiment, the details page jump module is configured to:
receive the predetermined sliding operation with an operating start point located in a display region of the predetermined control; in accordance with a determination that a predetermined jump condition is satisfied, jump to the details page of the target object; wherein the predetermined jump condition comprises at least one of the following: an operating distance of the predetermined sliding operation being greater than a second predetermined distance threshold; an operating time of the predetermined sliding operation being greater than a predetermined time duration; an end of an operating process of the predetermined sliding operation.

In one embodiment, the predetermined control display module is further configured to:
during an operating process of the predetermined sliding operation, dynamically move a fourth display boundary of the predetermined control with a change of an operating position of the predetermined sliding operation.

Reference is now made to FIG. 11, which is a schematic structural diagram of an electronic device 1100 suitable for implementing the embodiments of the present disclosure. The electronic device in the embodiments of the present disclosure may include, but is not limited to, mobile terminals such as a mobile phone, a notebook computer, a digital broadcast receiver, a personal digital assistant (PDA), a PAD (tablet computer), a portable media player (PMP) and a vehicle-mounted terminal (for example, a vehicle-mounted navigation terminal), and fixed terminals such as a digital television (TV) and a desktop computer. The electronic device shown in FIG. 11 is merely an example, and should not impose any limitation to the function or the scope of application of the embodiments of the present disclosure.

As shown in FIG. 11, the electronic device 1100 may include a processing device (such as a central processing unit and a graphics processor) 1101, which may execute various appropriate actions and processing according to a program stored in a read-only memory (ROM) 1102 or a program loaded to a random access memory (RAM) 1103 from a storage device 1108. Various programs and data required during operation of the electronic device 1100 are also stored in the RAM 1103. The processing device 1101, the ROM 1102 and the RAM 1103 are connected with one another via a bus 1104. An input/output (I/O) interface 1105 is also connected to the bus 1104.

Generally, the following apparatuses may be connected to the I/O interface 1105: an input device 1106 including for example a touch screen, a touch pad, a keyboard, a mouse, a camera, a microphone, an accelerometer and a gyroscope; an output device 1107 including for example a liquid crystal display (LCD), a speaker and a vibrator; a storage device 1108 including for example a magnetic tape and a hard disk; and a communication device 1109. The communication device 1109 may allow wireless or wired communication between the electronic device 1100 and other devices for data exchange. Although FIG. 11 shows the electronic device 1100 having various devices, it should be understood that not all the devices shown are necessarily required to be implemented or provided. More or fewer devices may alternatively be implemented or provided.

In particular, according to the embodiments of the present disclosure, the process described above with reference to the flowcharts may be implemented as a computer software program. For example, an embodiment of the present disclosure provides a computer program product including a computer program carried on a non-transient computer-readable medium. The computer program includes a program code for executing the methods shown in the flowcharts. In such an embodiment, the computer program may be downloaded and installed from the network via the communication device 1109, or installed from the storage device 1108, or installed from the ROM 1102. The computer program, when executed by the processing unit 1101, causes the processing unit to execute the above functions defined in the methods according to the embodiments of the present disclosure.

It should be noted that the computer-readable medium according to the present disclosure may be a computer-readable signal medium or a computer-readable storage medium or any combination of the two. The computer-readable storage medium may be, for example, but is not limited to, an electrical, magnetic, optical, electromagnetic, infrared, or semiconductor system, apparatus, or device, or any combination thereof. More specific examples of the computer-readable storage medium include but are not limited to: an electrical connection with at least one wire, a portable computer disk, a hard disk, a random-access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof. In the present disclosure, the computer-readable storage medium may be any tangible medium that contains or stores a program. The program may be used by or used in combination with an instruction execution system, apparatus, or device. However, in the present disclosure, the computer-readable signal medium may include a data signal propagated in baseband or as a part of a carrier wave, and computer-readable program code is carried therein. This propagated data signal may take many forms, including but not limited to electromagnetic signals, optical signals, or any suitable combination thereof. The computer-readable signal medium may also be any computer-readable medium other than the computer-readable storage medium. The computer-readable signal medium may send, propagate, or transmit the program used by or used in combination with the instruction execution system, apparatus, or device. The program code contained on the computer-readable medium may be transmitted by any suitable medium, including but not limited to, wire, optical cable, RF, etc., or any suitable combination thereof.

The computer-readable medium may be included in the electronic device described above; or it may stand alone without being assembled into the electronic device.

The computer-readable medium carries one or more programs, and when the one or more programs are executed by the electronic device, the electronic device: detects that predetermined application is launched; displays a launch page in the predetermined application, and displays a predetermined control at a predetermined page boundary of the launch page, wherein the launch page comprises multimedia display information of a target object, and the predetermined control is configured to jump to a details page of the target object after being triggered by a predetermined sliding operation, and a sliding direction of the predetermined sliding operation is a direction away from the predetermined page boundary.

Computer program code for performing the operations of the present disclosure may be written in one or more programming languages, or combinations thereof, including but not limited to Object Oriented programming languages such as Java, Smalltalk, C++, and also including conventional procedural programming languages such as "C" language or similar programming languages. The program code may be executed entirely on the user's computer, partially on the user's computer, as a standalone software package, partially on the user's computer, or entirely on the remote computer or server. In the case of a remote computer, the remote computer may be connected to the user's computer through any type of network, including a local area network (LAN) or a wide area network (WAN), or may be connected to an external computer (e.g., using an Internet service provider to connect via the Internet).

The flowcharts and block diagrams in the accompanying drawings illustrate the architecture, functions, and operations of systems, methods, and computer program products that may be implemented in accordance with various embodiments of the present disclosure. in this regard, each block in the flowchart or block diagram may represent a module, program segment, or portion of code that comprises one or more executable instructions for implementing a specified logical function. It should also be noted that in some alternative implementations, the functions indicated in the blocks may also occur in a different order than those indicated in the figures. For example, two blocks represented in succession may actually be executed substantially in parallel, and they may sometimes be executed in reverse order, depending on the function involved. It should also be noted that each block in the block diagram and/or flowchart, and combinations of blocks in the block diagram and/or flowchart, may be implemented using a dedicated hardware-based system that performs the specified function or operation, or may be implemented using a combination of dedicated hardware and computer instructions.

The modules described in the embodiments of the present disclosure can be implemented in software or hardware. The name of the module does not limit the module itself in one case. For example, the launch detecting module can also be described as "a module that detects whether a predetermined application is launched."

The functions described above in this article can be performed at least in part by one or more hardware logic components. For example, without limitation, exemplary types of hardware logic components that can be used include: Field Programmable Gate Arrays (FPGAs), Application Specific Integrated Circuits (ASICs), Application Specific Standard Parts (ASSPs), System on Chip (SOCs), Complex Programmable Logic Devices (CPLDs), and so on.

In the context of the present disclosure, machine-readable media can be tangible media that can contain or store programs for use by or in conjunction with instruction execution systems, devices, or devices. Machine-readable media can be machine-readable signal media or machine-readable storage medium. Machine-readable media can include, but are not limited to, electronic, magnetic, optical, electromagnetic, infrared, or semiconductor systems, devices, or devices, or any suitable combination thereof. Examples of machine-readable storage medium may include electrical connections based on one or more wires, portable computer disks, hard disks, RAM, ROM, EPROM or flash memory, optical fibers, CD-ROMs, optical storage devices, magnetic storage devices, or any suitable combination thereof.

According to one or more embodiments of the present disclosure, there is provided a method of page processing, comprising:
detecting that predetermined application is launched;
presenting a launch page in the predetermined application, and presenting a predetermined control at a predetermined page boundary of the launch page, wherein the launch page comprises multimedia display information of a target object, and the predetermined control is configured to jump to a details page of the target object after being triggered by a predetermined sliding operation, and a sliding direction of the predetermined sliding operation is a direction away from the predetermined page boundary.

According to one or more embodiments of the present disclosure, a first display boundary of the predetermined control overlaps with the predetermined page boundary.

According to one or more embodiments of the present disclosure, a display length of the first display boundary is equal to a display length of the predetermined page boundary.

According to one or more embodiments of the present disclosure, a line shape of a second display boundary of the predetermined control is an arc shape protruding towards a center point of the launch page.

According to one or more embodiments of the present disclosure, the predetermined control is provided with a dynamic display effect, and the dynamic display effect comprises dynamically extending from the predetermined page boundary towards a center point of the launch page until a minimum distance between a third display boundary of the predetermined control and the center point reaches a first predetermined distance threshold.

According to one or more embodiments of the present disclosure, a ratio of a display area of the predetermined control to a display area of the launch page is less than a predetermined ratio threshold.

According to one or more embodiments of the present disclosure, the predetermined control comprises operation prompt information of the predetermined sliding operation, and the operation prompt information comprises at least one of text prompt information or graphic prompt information.

According to one or more embodiments of the present disclosure, a transparency degree of the predetermined control is greater than 0 and less than 1.

According to one or more embodiments of the present disclosure, after presenting the predetermined control at the predetermined page boundary of the launch page, further comprising:
in response to the predetermined sliding operation for the predetermined control, jumping to the details page of the target object.

According to one or more embodiments of the present disclosure, in response to the predetermined sliding operation for the predetermined control, jumping to the details page of the target object comprises:
receiving the predetermined sliding operation with an operating start point located in a display region of the predetermined control;
in accordance with a determination that a predetermined jump condition is satisfied, jumping to the details page of the target object;
wherein the predetermined jump condition comprises at least one of the following:
   an operating distance of the predetermined sliding operation being greater than a second predetermined distance threshold;
   an operating time of the predetermined sliding operation being greater than a predetermined time duration;
   an end of an operating process of the predetermined sliding operation.

According to one or more embodiments of the present disclosure, a transparency degree of the predetermined control is greater than 0 and less than 1, the method further comprising:
during an operating process of the predetermined sliding operation, dynamically moving a fourth display boundary of the predetermined control with a change of an operating position of the predetermined sliding operation.

According to one or more embodiments of the present disclosure, there is provided an apparatus for page processing, comprising:
a launch detecting module configured to detect whether a predetermined application is launched;
a predetermined control display module configured to, after detecting that the predetermined application is launched, display a launch page in the predetermined application, and display a predetermined control at a predetermined page boundary of the launch page, wherein the launch page comprises multimedia display information of a target object, and the predetermined control is configured to jump to a details page of the target object after being triggered by a predetermined sliding operation, and a sliding direction of the predetermined sliding operation is a direction away from the predetermined page boundary.

In addition, although multiple operations are depicted in a specific order, this should not be understood as requiring these operations to be performed in the specific order shown or in sequential order. Under certain circumstances, multitasking and parallel processing may be advantageous. Similarly, although multiple implementation details are included in the above discussion, these should not be construed as limiting the scope of the present disclosure. Some features described in the context of individual embodiments can also be implemented in combination in a single embodiment. Conversely, multiple features described in the context of a single embodiment can also be implemented in multiple embodiments separately or in any suitable sub-combination.

## Claims

1. A method of page processing, comprising:
detecting that predetermined application is launched;
presenting a launch page in the predetermined application, and presenting a predetermined control at a predetermined page boundary of the launch page, wherein the launch page comprises multimedia display information of a target object, and the predetermined control is configured to jump to a details page of the target object after being triggered by a predetermined sliding operation, and a sliding direction of the predetermined sliding operation is a direction away from the predetermined page boundary.

2. The method of claim 1, wherein a first display boundary of the predetermined control overlaps with the predetermined page boundary.

3. The method of claim 2, wherein a display length of the first display boundary is equal to a display length of the predetermined page boundary.

4. The method of claim 2, wherein a line shape of a second display boundary of the predetermined control is an arc shape protruding towards a center point of the launch page.

5. The method of claim 1, wherein the predetermined control is provided with a dynamic display effect, and the dynamic display effect comprises dynamically extending from the predetermined page boundary towards a center point of the launch page until a minimum distance between a third display boundary of the predetermined control and the center point reaches a first predetermined distance threshold.

6. The method of claim 1, wherein a ratio of a display area of the predetermined control to a display area of the launch page is less than a predetermined ratio threshold.

7. The method of claim 1, wherein the predetermined control comprises operation prompt information of the predetermined sliding operation, and the operation prompt information comprises at least one of text prompt information or graphic prompt information.

8. The method of claim 1, wherein a transparency degree of the predetermined control is greater than 0 and less than 1.

9. The method of any of claims 1-8, after presenting the predetermined control at the predetermined page boundary of the launch page, further comprising:
in response to the predetermined sliding operation for the predetermined control, jumping to the details page of the target object.

10. The method of claim 9, wherein in response to the predetermined sliding operation for the predetermined control, jumping to the details page of the target object comprises:
receiving the predetermined sliding operation with an operating start point located in a display region of the predetermined control;
in accordance with a determination that a predetermined jump condition is satisfied, jumping to the details page of the target object;
wherein the predetermined jump condition comprises at least one of the following:
an operating distance of the predetermined sliding operation being greater than a second predetermined distance threshold;
an operating time of the predetermined sliding operation being greater than a predetermined time duration;
an end of an operating process of the predetermined sliding operation.

11. The method of claim 9, wherein a transparency degree of the predetermined control is greater than 0 and less than 1, the method further comprising:
during an operating process of the predetermined sliding operation, dynamically moving a fourth display boundary of the predetermined control with a change of an operating position of the predetermined sliding operation.

12. An apparatus for page processing, comprising:
a launch detecting module configured to detect whether a predetermined application is launched;
a predetermined control display module configured to, after detecting that the predetermined application is launched, display a launch page in the predetermined application, and display a predetermined control at a predetermined page boundary of the launch page, wherein the launch page comprises multimedia display information of a target object, and the predetermined control is configured to jump to a details page of the target object after being triggered by a predetermined sliding operation, and a sliding direction of the predetermined sliding operation is a direction away from the predetermined page boundary.

13. An electronic device comprising a memory, a processor, and a computer program stored on the memory and executable by the processor, wherein the method of page processing according to any one of claims 1 to 11 is implemented when the processor executes the computer program.

14. A computer-readable storage medium storing a computer program, wherein the method of page processing according to any one of claims 1 to 11 is implemented when the program is executed by a processor.
